# EUROPÄISCHE PATENTANMELDUNG

(11) **EP 0 623 907 A1**
(43) Veröffentlichungstag der Anmeldung: **09.11.1994**
(21) Anmeldenummer: 94106722.5
(22) Anmeldetag: 29.04.1994
(51) Int. Cl.: G09B 15/00, G09B 15/02

(54) **Tonlineal für die Musiklehre**

(30) Priorität: 06.05.1993 DE 4314956
(71) Anmelder: Spaude, Hans-Martin, D-75242 Neuhausen-Hamberg (DE)
(72) Erfinder: Spaude, Hans-Martin, D-75242 Neuhausen-Hamberg (DE)
(74) Vertreter: Müller, Gerd, Dipl.-Ing.

(57) **Zusammenfassung**

Ein Tonlineal (1) für die Musiklehre zur visuellen Anzeige der Tonfolge von Tonleitern und/oder Akkorden in den verschiedenen Tonarten eines Tonsystems, bestehend aus einem länglichen Grundkörper (2), der mit festen Skalen (7, 8; 9, 10) versehen ist, die die mit einer gleichmäßigen Teilung angeordneten Töne des Tonsystems aufweisen, und austauschbaren Schiebern (11, 13, 14), die axial verschiebbar in dem Grundkörper (2) geführt und mit den Tonfolgen der Tonleiter und der Akkorde in einer der Teilung der festen Skalen (7, 8; 9, 10) entsprechenden Teilung versehene Skalen (7, 8;9, 10) aufweisen, wird bedienungsfreundlicher, wenn der Schieber (11, 13, 14) in dem Grundkörper (2) in einer Hochkantlage angeordnet ist.

## Beschreibung

Die Erfindung betrifft ein Tonlineal für die Musiklehre zur visuellen Anzeige der Tonfolge von Tonleitern und/oder Akkorden in den verschiedenen Tonarten eines Tonsystems, bestehend aus einem länglichen Grundkörper, der mit festen Skalen versehen ist, die die mit einer gleichmäßigen Teilung angeordneten Töne des Tonsystems aufweisen, und austauschbaren Schieberskalen, die verschiebbar in dem Grundkörper geführt und mit Tonfolgen der Tonleiter und der Akkorde in einer der Teilung der festen Skalen entsprechenden Teilung versehen sind.

Ein Tonlineal dieser Art ist durch die britische Patentschrift 185 862 bekanntgeworden. Es kann als Lernhilfe sowohl für Anfänger als auch für Fortgeschrittene herangezogen werden und trägt zum besseren Verständnis der relativ komplizierten räumlichen Vorstellung der auf dem sogenannten diatonischen Tonsystem, einem 12-Tonsystem aus Halbtonschritten, beruhenden abendländischen Tonkultur bei. Die auf diesem System aufgebaute Tonleiter umfaßt acht Tonschritte, von denen die Stufe vom dritten zum vierten und vom siebten zum achten ein Halbtonschritt ist. Zwischen allen anderen Stufen liegen Ganztonschritte. Jede Komposition, die in einer anderen als der C-Tonart verfaßt ist, muß der durch das beschriebene Tonleitersystem vorgegebenen Folge von Ganz- und Halbtonschritten entsprechen. Das relativ komplizierte Prinzip, zwölf Einzeltöne je nach der gewählten Tonart in ein System von Tönen mit unterschiedlichen Abständen (Tonleiter) einzupassen, bereitet daher nicht nur Anfängern Schwierigkeiten, sondern beispielsweise auch den diese oft nicht einfachen Zusammenhänge vermittelnden Lehrkräften. Das Vorgenannte gilt gleichermaßen für aktive Musiker, die beim geistigen Konstruieren von Tonleitern und Akkorden aufwendige Denkarbeit verrichten müssen, so daß sich häufig Fehler nicht vermeiden lassen. Eine Abhilfe kann hier das obengenannte Tonlineal schaffen.

Das bekannte Tonlineal weist in Analogie zu einem Rechenschieber einen zungenartigen Schieber auf, der sich umstecken oder gegen Schieber mit anderen Skalen austauschen läßt. Der auf seiner Oberseite mit festen Skalen versehene Grundkörper dieses Tonlineals ist mit einer Schwalbenschwanzführung versehen, in die sich der zungenartige Schieber einführen läßt. Hierzu ist es allerdings - wie halt auch bei einem Rechenschieber - erforderlich, den Schieber entsprechend seiner gesamten Länge seitlich aus der Schwalbenschwanzführung des Grundkörpers herauszuziehen und beim Umstecken bzw. Einführen eines anderen Schiebers diesen von der Seite her in die Schwalbenschwanzführung einzubringen. Beim Umstecken bzw. Austauschen eines Schiebers steht dieser somit weit gegenüber dem Grundkörper vor und beansprucht seitlich einen großen Frei- bzw. Handhabungsraum, was beispielsweise bei einem Schulunterricht zu gegenseitigen Behinderungen führt, wenn mehrere benachbart nebeneinander sitzende Schüler bzw. Benutzer des Tonlineals die Schieber gleichzeitig umstecken bzw. austauschen.

Der Erfindung liegt daher die Aufgabe zugrunde, ein gattungsgemäßes Tonlineal ohne die genannten Nachteile zu schaffen, d.h. insbesondere bedienungsfreundlicher zu gestalten.

Diese Aufgabe wird auf verblüffend einfache Weise dadurch gelöst, daß der Schieber in dem Grundkörper in einer Hochkantlage angeordnet ist. Nach wie vor werden alle Vorteile ausgeschöpft, die einem nach dem Rechenschieberprinzip aufgebauten Tonlineal für die Musiklehre immanent sind. Aufgrund der in Hochkantlage angeordneten Schieber wird gegenüber allen bekannten Tonlinealen weiterhin noch erreicht, daß sich eine sehr einfache, unkomplizierte Handhabung beim Umstecken bzw. Austausch der Akkord-Intervall-Schieber ergibt. Denn diese lassen sich von oben in den Grundkörper einsetzen, so daß seitlich kein Platz beansprucht wird, wie das beim Einstecken der zungenartigen Schieber von der Seite her unabdingbar ist. Außerdem erfordert das Einstecken von oben weit weniger Geschick und Zeitaufwand als das Einfädeln einer Schieberzunge von der Seite her in eine Schwalbenschwanzführung des Grundkörpers.

Eine bevorzugte Ausgestaltung der Erfindung sieht daher vor, daß zumindest eine Längsseite des Grundkörpers mit einer sich längs zwischen den festen Skalen erstreckenden, im Querschnitt im wesentlichen rechteckigen, geringfügig breiter als die Schmalseite der Schieber ausgebildeten schlitzartigen Führungsnut versehen ist. Da die schlitzartige, über die gesamte Länge des Grundkörpers verlaufende Führungsnut nur unwesentlich breiter als die Dicke der Schieber ist, liegt zwischen dem von oben eingesteckten Schieber und den seitlichen Begrenzungen der Führungsnut etwas Luft vor, so daß das Einstecken der Schieber in die Führungsnut erleichtert wird. Die Funktion des erfindungsgemäßen Tonlineals als optisches Lern- und Hilfsmittel setzt nämlich keinen ein sorgfältiges Fügen erfordernden paßgenauen Führungssitz voraus.

Nach einem Vorschlag der Erfindung läßt sich die Führungsnut schrägverlaufend ausbilden. In diesem Fall ist es möglich, den von oben her in der Hochkantlage eingesteckten Schieber von der Betrachterseite her geringfügig nach hinten wegkippend, d.h. entsprechend der Neigung der Führungsnut mit einer leichten Schräglage in den Grundkörper einzusetzen, wodurch sich für den Betrachter ein günstigeres Sichtfeld ergeben kann. Der gleiche Effekt ließe sich bei einer vertikalen Führungsnut erreichen, wenn die Nut oben breiter als unten, d.h. sich zum Nutgrund hin verjüngend ausgebildet ist.

Wenn die Schieber vorteilhaft auf ihren beiden Flachseiten mit unterschiedlichen Kennzeichnungen versehen sind, bieten sich dem Benutzer des Tonlineals durch einfaches Umstecken der Schieber entsprechend verschiedene Tonfolgen der Tonleiter bzw. der Akkorde.

Eine Ausgestaltung der Erfindung sieht vor, daß zwei Längsseiten des Grundkörpers mit einer vertikalen Führungsnut versehen sind, denen feste Skalen unterschiedlicher Tonarten zugeordnet sind. Das Tonlineal ist damit von seiner Grundausstattung her mit mehreren Tonsystem-Skalen ausgerüstet, und wenn der Grundkörper beispielsweise einen dreieckigen oder quadratischen Querschnitt besitzt, können auf entweder allen drei bzw. allen vier Seiten Führungsnuten vorgesehen und diesen für unterschiedliche Tonarten feste Skalen zugeordnet werden, denen sich die mit einer Tonleiter- oder Akkordeinteilung auf ihren Skalen versehenen, linear verschiebbaren und auswechselbaren Schieber zuordnen lassen. In der Gegenüberstellung der Skalen läßt sich stets unmittelbar die Tonfolge der Tonleiter oder eines Akkordes ablesen.

Gemäß der Erfindung wird vorgeschlagen, daß die Schieber durch Magnetkraft in der Führungsnut gehalten sind. Es wird daher vorgeschlagen, daß im Nutgrund und/oder an den Schmalseiten der Schieber ein Magnetband oder Haftmagneten angeordnet sind. Die Magnetkraft ist so bemessen, daß das lineare Verschieben der Schieber in dem vorteilhaft etwa doppelt so lang wie die Schieber ausgeführten Grundkörper nicht beeinträchtigt wird. Sie soll aber verhindern, daß der Schieber aus der Führungsnut herausfällt oder sich in dieser verschiebt, wenn der Grundkörper etwas angehoben oder gar - statt beispielsweise den Schieber umzustecken - um seine Längsachse gedreht wird. Besteht der Schieber aus einem nichtmagnetischen Material, beispielsweise aus Kunststoff, lassen sich seine Schmalseiten - von denen ja in der eingesteckten Hochkantlage entweder die eine oder andere dem Nutgrund zugewandt ist - mit z.B. einer Magnetfolie versehen.

Wenn nach einem weiteren Vorschlag der Erfindung in die Führungsnut in Hochkantlage eine Notentafel, z.B. für einen Violin- oder Baßschlüssel, eingesteckt ist, lassen sich die Notennamen der auf den festen Skalen beidseitig der Führungsnut mit einer gleichmäßigen Teilung angeordneten Töne des Tonsystems optisch festlegen und somit eine Verbindung zu den Noten herstellen. In diesem Fall empfiehlt es sich, daß die Notentafel die Führungsnut beidendig mit Rastnasen übergreift, so daß sie sich nicht verschieben läßt und eine bezogen auf die festen Skalen unveränderte Position einnimmt.

Weitere Merkmale und Vorteile der Erfindung ergeben sich aus den Patentansprüchen und der nachfolgenden Beschreibung, in der einige Ausführungsbeispiele des Gegenstandes der Erfindung näher erläutert sind. Es zeigen:
- Fig. 1: in perspektivischer Darstellung einen in eine Führungsnut des Grundkörpers eines Tonlineals in Hochkantlage eingesteckten Schieber;
- Fig. 2: als Einzelheit des Tonlineals nach Fig. 1 eine an dessen Grundkörper fest anzubringende, über zwei Oktaven reichende C-Tonarten-Skala mit dieser auf Skalen von zwei austauschbaren Schiebern zugeordneten Tonleitern und Akkorden;
- Fig. 3: eine an dem Grundkörper des Tonlineals nach Fig. 1 fest anzubringende, über zwei Oktaven reichende Skala, die alle Ganz- und Halbtöne aufweist;
- Fig. 4: Modifikationen von an dem Grundkörper des Tonlineals nach Fig. 1 anzubringenden festen Skalen, nämlich eine b-Tonarten und eine #-Tonarten-(Kreuztonarten-)Skala, mit zugeordneter Tonleiter- und Akkord-Skala; und
- Fig. 5: die Vorder- und die Rückseite einer Notentafel.

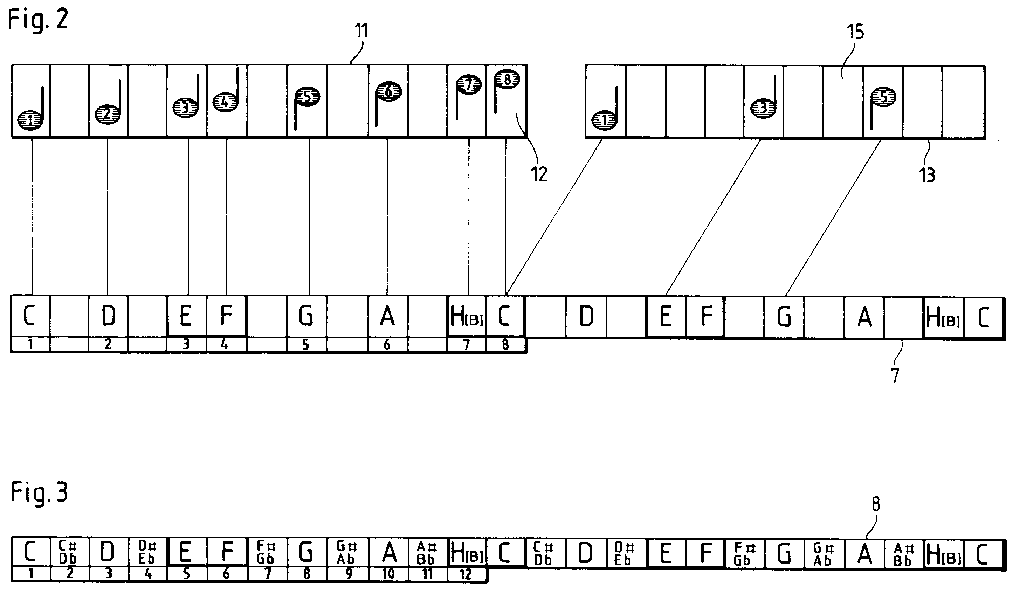

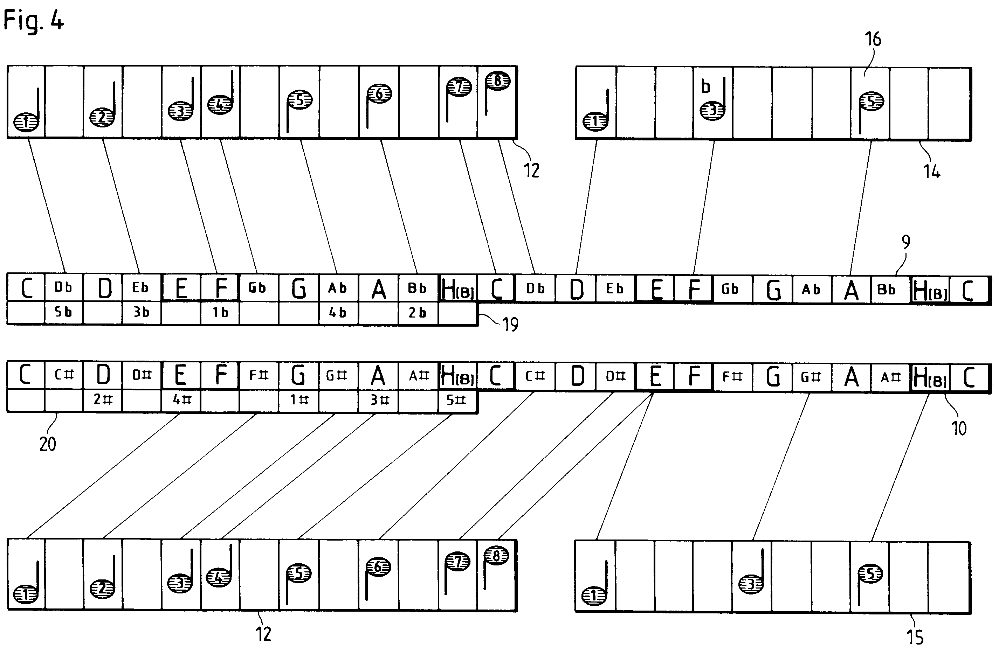

Ein Tonlineal 1 zur visuellen Anzeige der Tonfolge von Tonleitern und/oder Akkorden in verschiedenen Tonarten des diatonischen Tonsystems besteht aus einem langgestreckten, flachen Grundkörper 2. Dieser weist sowohl in seiner oberen als auch unteren Längsseite 3 bzw. 4 eine sich über die gesamte Länge des Grundkörpers 2 erstreckende, im Querschnitt im wesentlichen rechteckige, vertikale Führungsnut 5 bzw. 6 auf. Rechts und links von den Führungsnuten 5 bzw. 6 sind Tonsystemskalen 7, 8 (vgl. die Fig. 2 und 3) bzw. 9 und 10 (vgl. Fig. 4) fest angeordnet, dort beispielsweise gegebenenfalls lösbar aufgeklebt.

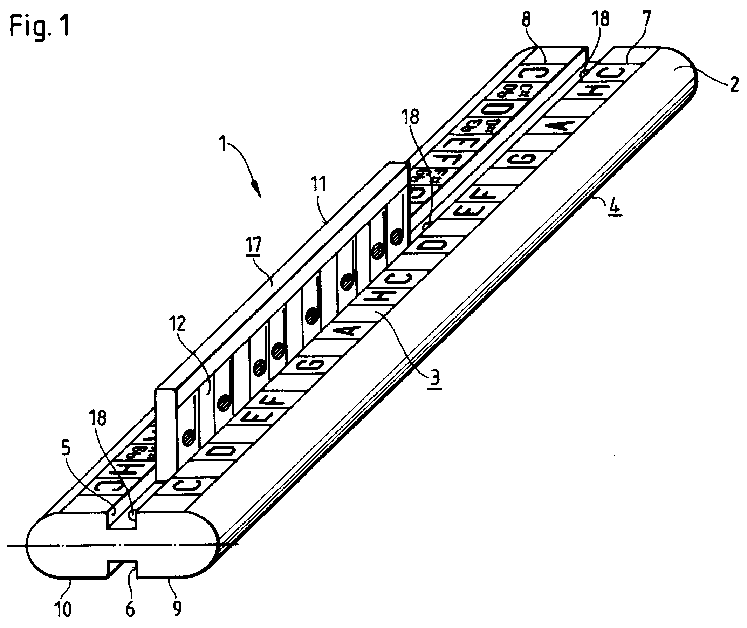

Die Führungsnut 5 - und nach dem Wenden des Grundkörpers 2 um seine Längsachse um 180° entsprechend die Führungsnut 6 - dient zur Aufnahme eines gegenüber dem Grundkörper 2 wesentlich kürzeren, austauschbaren und in der Führungsnut 5 bzw. 6 längsverschiebbaren Schiebers 11, der auf seiner dem Benutzer gemäß Fig. 1 zugewandten Sichtseite mit einer Tonleiterskala 12 (vgl. auch die Fig. 2 und 4) versehen ist. Die weiteren, in den Fig. 2 und 4 gezeigten Schieber 13 bzw. 14 sind ebenso wie der Schieber 11 nach Fig. 1 vorzugsweise auf beiden Längsseiten mit separaten Skalen versehen, deren Teilung gleich der Teilung der beidseitig der Führungsnuten 5, 6 angeordneten festen Tonsystem-Skalen 7 bis 10 ist. Neben dem die Tonleiter-Skala 12 aufweisenden Schieber 11 sind aus der möglichen Vielzahl der Akkorde auf den Schiebern 13 und 14 nur der Grund- oder Dur-Akkord (vgl. die Skala 15 in Fig. 2) bzw. der Moll-Akkord (vgl. die Skala 16 in Fig. 4) gezeigt.

Je nach Bedarf kann ein Schieber, um eine gewünschte Tonleiter-Skala oder eine gewünschte Akkord-Skala zum Einsatz zu bringen, auf einfache Weise ausgetauscht bzw. umgesteckt werden, denn ein die betreffende Skala 12 bzw. 15 oder 16 aufweisender Schieber 11 bzw. 13 oder 14 läßt sich einfach, ohne seitlich neben dem Grundkörper 2 Platz zu beanspruchen, von oben in die Führungsnut 5 bzw. 6 in Hochkantlage einstellen, wie in Fig. 1 dargestellt, oder entsprechend aus der Führungsnut 5, 6 entnehmen. Die Führungsnuten 5, 6 sind geringfügig breiter als die auf ihren beiden Flachseiten die Skalen 12, 15, 16 aufweisenden Schieber 11 bzw. 13, 14 dick sind, so daß sich die Schieber 11, 13, 14 mit etwas Luft in die Führungsnut 5, 6 einstecken lassen. Zur Sicherung der eingesteckten Hochkantlage und Einstellposition der Schieber 11 bzw. 13 und 4 können in den Schmalseiten 17 der Schieber 11 bzw. 13, 14 oder - wie in Fig. 1 gezeigt - im Nutgrund der Führungsnuten 5, 6 ein Magnetband oder Haftmagneten 18 angeordnet werden.

In den Fig. 2, 3 und 4 sind - der Einfachheit halber losgelöst von dem Grundkörper 2 des Tonlineals 1 - Tonsystem-Skalen 7 bis 10 und die ihnen zugeordneten separaten Skalen, nämlich die Tonleiter-Skala 12 sowie die Dur- bzw. Moll-Akkord-Skalen 15 bzw. 16 gezeigt. Die Zuordnung der von den Schiebern 11 bzw. 12, 13 getragenen Skalen 12 bzw. 15 und 16 zu den am Grundkörper 2 befestigten Tonsystem-Skalen 7 bis 10 ist durch Strichverbindungen verdeutlicht.

Wie sich aus den Fig. 2 bis 4 im einzelnen ergibt, stellt Fig. 2 eine sich über zwei Oktaven erstreckende, nur die Grundtöne des diatonischen Tonsystems umfassende Skala 7 dar, der die Tonleiterskala 12 mit dem Grundton C zugeordnet ist. Die von der Tonsystem- bzw. -leiterskala 7 angezeigten Töne C-D-E-F-G-A-H/B-C decken sich mit der Tonreihe der Tonleiter-Skala 12. Die separate, auf dem Schieber 13 vorhandende Skala 15 zeigt die Tonfolge des Dur-Akkords, der - bei einer der Darstellung angenommenen entsprechenden Schieberstellung - als sogenannter Dreiklang aus verschiedenen Grundtönen besteht, und zwar hier C sowie dem dritten (E) und dem fünften (G) Grundton.

Die in Fig. 3 gezeigte, sich über zwei Oktaven erstreckende Tonsystem-Skala 8 weist außer den Grundtönen des diatonischen Tonsystems die dazwischenliegenden Halbtöne der b- und #-Tonarten auf und läßt ihre klangliche Übereinstimmung auf einen Blick erkennen. Die sich daraus ergebende Zwölf-Tonreihe bildet die Basis des diatonischen Tonsystems.

Die Fig. 4 zeigt eine aus der Skala nach Fig. 3 extrahierte B-Tonsystem-Skala 9 und eine #Tonsystem-Skala 10. Diesen beiden Tonarten bzw. -system-Skalen 9, 10 ist je eine zusätzliche Skala 19 bzw. 20 beigeordnet, denen sich bei der Festlegung der Tonart einer Komposition die Anzahl der in dieser Tonart zu berücksichtigenden Vorzeichen b bzw. # (Kreuzton) entnehmen lassen. Gemäß der in der oberen Hälfte von Fig. 4 gezeigten Zuordnung der Tonleiter-Skala 12 zur B-Tonsystem-Skala 9 ist der Grundton Db. Die beigeordnete Skala 19 zeigt dann an, daß in diesem Fall fünf Vorzeichen zu berücksichtigen sind, wie sich der auf den Grundton Db eingestellten Tonleiter-Skala 12 entnehmen läßt. Die auf der einen Seite des Schiebers 14 vorhandene, in Fig. 4 rechts oben separate Skala 16 stellt einen Moll-Akkord dar. Beim Grundton D besteht dieser aus der Tonfolge D-F-A.

In gleicher Weise wird durch die in der unteren Hälfte von Fig. 4 abgebildete, der #-Tonarten-Skala 10 zugeordnete zusätzliche Skala 20 angezeigt, wieviel Vorzeichen bei der Festlegung einer #-Tonart zu berücksichtigen sind. Das sind bei der beispielsweisen Wahl der #-Tonart E-Dur gemäß der Skala 20 vier Vorzeichen. Das wird durch Einstellen der in Fig. 4 links unten gezeigten Tonleiter-Skala 12 auf den Grundton E bestätigt. Die in Fig. 4 rechts unten dargestellte separate Skala 20 zeigt wieder die Tonfolge des Dur-Akkords an, der in der angenommenen Schieberstellung auf den Grundton E aus der Tonfolge E-G # (gis)-H(B) besteht.

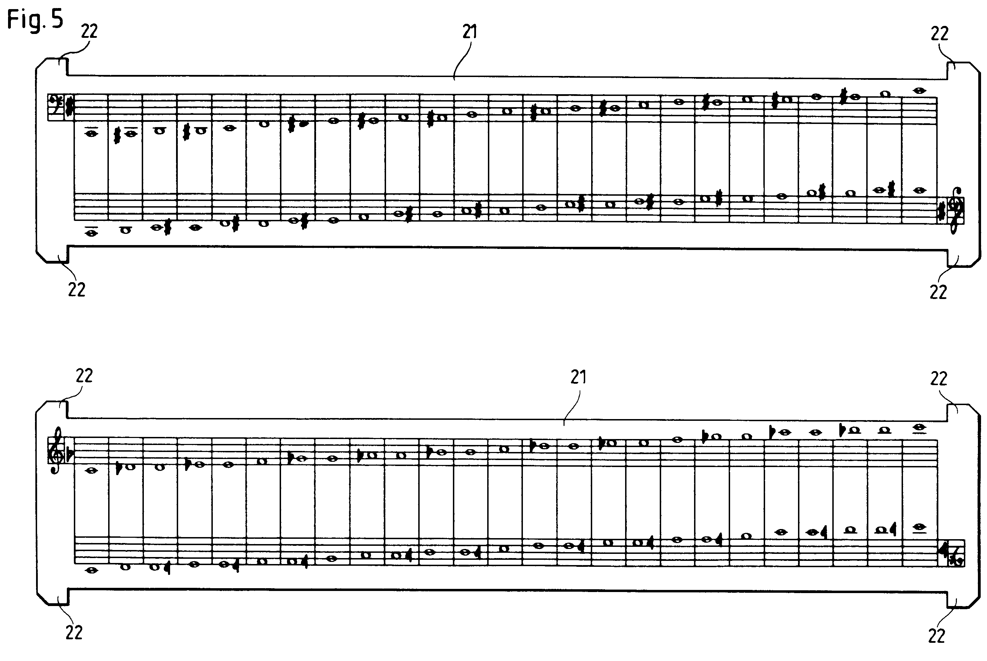

Unter Zuhilfenahme einer in Fig. 5 dargestellten Notentafel 21 lassen sich die durch die jeweilige Einstellposition der von den Schiebern 13, 14 getragenen Skalen 12, 15, 16 ermittelten Notennamen auch optisch gleich festlegen. Zu diesem Zweck braucht die Notentafel 21 lediglich in die Führungsnut 5 bzw. 6 in Hochkantlage eingesteckt zu werden; damit sich die Notentafel 21 axial nicht verschieben kann, besitzt sie endseitig angeordnete Rastnasen 22, die in der Einstellposition die Führungsnut 5 bzw. 6 beidendig übergreifen, d.h. die zwischen den einander in Längsrichtung gegenüberliegenden Rastnasen 22 bemessene Länge der Notentafel 21 entspricht etwa der der Führungsnut 5 bzw. 6 und damit des Grundkörpers 2 des Tonlineals 1. Auch die Notentafel 21 kann durch Umstecken und/oder Wenden benutzt werden.

## Patentansprüche

1. Tonlineal für die Musiklehre zur visuellen Anzeige der Tonfolge von Tonleitern und/oder Akkorden in den verschiedenen Tonarten eines Tonsystems, bestehend aus einem länglichen Grundkörper, der mit festen Skalen versehen ist, die die mit einer gleichmäßigen Teilung angeordneten Töne des Tonsystems aufweisen, und austauschbaren Schiebern, die axial verschiebbar in dem Grundkörper geführt und mit den Tonfolgen der Tonleiter und der Akkorde in einer der Teilung der festen Skalen entsprechenden Teilung versehene Skalen aufweisen,
**dadurch gekennzeichnet**,
daß der Schieber (11, 13, 14) in dem Grundkörper (2) in einer Hochkantlage angeordnet ist.

2. Tonlineal nach Anspruch 1,
**dadurch gekennzeichnet**,
daß zumindest eine Längsseite (3 bzw. 4) des Grundkörpers (2) mit einer sich längs zwischen den festen Skalen (7, 8; 9, 10; 9, 19; 10,20) erstreckenden, im Querschnitt im wesentlichen rechteckigen, geringfügig breiter als die Schmalseite (17) des Schiebers (11, 13, 14) ausgebildeten schlitzartigen Führungsnut (5, 6) versehen ist.

3. Tonlineal nach Anspruch 1 oder 2,
**dadurch gekennzeichnet**,
daß die Führungsnut (5, 6) schrägverlaufend ausgebildet ist.

4. Tonlineal nach einem der Ansprüche 1 bis 3,
**dadurch gekennzeichnet**,
daß die Schieber (11, 13, 14) auf ihren beiden Flachseiten mit unterschiedlichen Skalen (12, 15, 16) versehen sind.

5. Tonlineal nach einem der Ansprüche 1 bis 4,
**dadurch gekennzeichnet**,
daß zwei Längsseiten (3, 4) des Grundkörpers (2) Führungsnuten (5, 6) aufweisen, denen feste Skalen (7 bis 10; 9, 19; 10, 20) unterschiedlicher Tonarten zugeordnet sind.

6. Tonlineal nach einem der Ansprüche 1 bis 5,
**dadurch gekennzeichnet**,
daß die Schieber (11, 13, 14) durch Magnetkraft in der Führungsnut (5, 6) gehalten sind.

7. Tonlineal nach Anspruch 6,
**dadurch gekennzeichnet**,
daß im Nutgrund und/oder den Schmalseiten (17) der Schieber (11, 13, 14) ein Magnetband oder Haftmagneten (18) angeordnet sind.

8. Tonlineal nach einem der Ansprüche 1 bis 7,
**gekennzeichnet durch**
eine in die Führungsnut (5, 6) in Hochkantlage eingesteckte Notentafel (21).

9. Tonlineal nach Anspruch 8,
**dadurch gekennzeichnet**,
daß die Notentafel (21) die Führungsnut (5, 6) beidendig mit Rastnasen (22) übergreift.

10. Tonlineal nach einem der Ansprüche 1 bis 9,
**dadurch gekennzeichnet**,
daß der Grundkörper (2) etwa doppelt so lang wie die Schieber (11, 13, 14) ist.
